# DEMANDE DE BREVET EUROPEEN

(11) **EP 4 722 474 A1**
(43) Date de publication de la demande: **08.04.2026**
(21) Numéro de dépôt: 25197580.1
(22) Date de dépôt: 22.08.2025
(51) Int. Cl.: E04H 1/12, B60S 5/02, B67D 7/78

(54) **STATION-SERVICE MOBILE À RÉSERVOIR AÉRIEN MANUTENTIONNABLE D'UN SEUL TENANT, TRANSPORTABLE PAR CAMION ET NE REPOSANT QUE SUR LES FONDATIONS DES BERCEAUX DU RÉSERVOIR**

(30) Priorité: 07.10.2024 FR 2410824
(71) Demandeur: Bion, Louis, 03000 Avermes (FR)
(72) Inventeur: Bion, Louis, 03000 Avermes (FR)
(74) Mandataire: Cabinet Chaillot

(57) **Abrégé**

L'invention concerne une station-service (1) mobile, comprenant un réservoir aérien (2) de stockage de carburant comportant au moins un compartiment de stockage de carburant et des berceaux de support (22). La station-service (1) comprend en outre :
- une ossature métallique de suspension (3) solidarisée à une partie supérieure du réservoir aérien (2) ; et
- un plancher technique (4) qui supporte un local technique (14) qui contient un ensemble de dépotage (52) de carburant, un local électrique (15) ainsi que des appareils de distribution (51) de carburant, le plancher technique (4) étant agencé sous une partie de l'ossature de suspension (3) qui est en porte-à-faux vis-à-vis du réservoir aérien (2), et solidarisé à l'ossature de suspension (3), de telle sorte qu'en utilisation le plancher technique (4) est supporté par le réservoir aérien (2) par l'intermédiaire de l'ossature de suspension (3).

## Description

La présente invention concerne le domaine technique des stations-service publiques, mobiles, à réservoir aérien de stockage de carburant, et porte plus particulièrement sur une structure qui permet de les rendre manutentionnables d'un seul tenant et transportables par camion.

Dans les années 1980, il y avait environ 40 000 stations-service publiques en France. Il n'en reste à ce jour qu'un peu plus de 11 000, ce qui signifie que sur les 35 400 communes de France, plus de 25 000 sont dépourvues de station-service et que leurs habitants sont obligés d'aller jusqu'en ville pour pouvoir s'approvisionner en carburant.

Les raisons de la disparition des anciennes stations-service sont connues, les principales étant :
- l'obsolescence des anciennes stations-service, qui ne sont plus conformes aux normes et aux règlementations actuelles ;
- le coût élevé de leur mise en conformité aux prescriptions des Arrêtés ministériels ;
- l'installation, par les grandes et moyennes surfaces, de stations-service importantes, le carburant étant leur principal produit d'appel.

Bien qu'elles soient nécessaires, voire même indispensables, les stations-service supprimées, qui avaient presque toutes des réservoirs enterrés, n'ont pas été remplacées ni par des stations-service à réservoir enterré, ni par des stations-service à réservoir aérien.

Pour une station-service, l'utilisation d'un réservoir aérien de stockage de carburant, plutôt qu'un réservoir enterré, présente plusieurs avantages, car le coût d'une station-service à réservoir aérien est inférieur à celui d'une station-service à réservoir enterré et la dépollution du sol sur lequel est implantée une station-service à réservoir aérien n'est pas nécessaire lorsque cette station est retirée, alors que cette dépollution est obligatoire dans le cas d'une station-service à réservoir enterré.

On comprend pourquoi les acquéreurs potentiels d'une station-service n'achètent plus de station à réservoir enterré. Par contre, on ne peut que s'interroger sur les raisons expliquant qu'ils n'acquièrent pas de stations-service à réservoir aérien : est-ce à cause du prix ? Est-ce parce que les constructeurs n'en ont pas conçues et n'en proposent pas ?

Il est possible, voir probable, que pour des raisons de main d'œuvre, les constructeurs préfèrent construire de grandes stations, toutes identiques, plutôt que des petites.

Il existe des stations-service publiques à réservoir aérien, qui ne sont ni manutentionnables d'un seul tenant ni transportables par un camion.

Ces stations-service comprennent :
- un réservoir de stockage de carburant, qui comporte des compartiments permettant de stocker au moins trois carburants, et très rarement quatre carburants, ainsi que des berceaux qui le supportent et dont le nombre est déterminé par le fabricant du réservoir, en fonction de la capacité, du diamètre et de la longueur du réservoir ;
- un bac de rétention, de forme parallélépipédique, situé sous le réservoir et destiné à récupérer le carburant contenu dans le réservoir, en cas de fuite du réservoir.
- un ensemble d'alimentation qui comprend une pompe de dépotage configurée pour approvisionner le réservoir à partir du camion ;
- un ensemble de distribution, qui comprend plusieurs appareils de distribution, généralement deux, qui permettent chacun de transférer tous les carburants du réservoir jusque dans le réservoir des véhicules ; et
- un bâtiment dans lequel sont implantés les éléments ci-dessus, et dont la couverture et les parois périphériques mettent la station-service à l'abri des intempéries, des vols de carburant et des actes de vandalisme, seuls les appareils de distribution restant accessibles au public.

Aucune solution pour rendre les stations-service mobiles à réservoir aérien, manutentionnables d'un seul tenant et transportables par un camion n'ayant été proposée à ce jour, la présente invention, qui a pour objectif de concevoir une structure qui permettra aux stations-service mobiles à réservoir aérien, qui en seront pourvues, d'être manutentionnables d'un seul tenant et transportables par camion, propose une station-service mobile, comprenant un réservoir aérien de stockage de carburant comportant au moins un compartiment de stockage de carburant et des berceaux de support, caractérisée par le fait que la station-service comprend en outre :
- une ossature métallique de suspension solidarisée à une partie supérieure du réservoir aérien, l'ossature de suspension s'étendant sur toute la longueur de la station-service ; et
- un plancher technique, qui supporte un local technique qui contient un ensemble de dépotage de carburant, un local électrique ainsi que des appareils de distribution de carburant, le plancher technique étant agencé sous une partie de l'ossature de suspension qui est en porte-à-faux vis-à-vis du réservoir aérien, et solidarisé à l'ossature de suspension, de telle sorte qu'en utilisation le plancher technique est supporté par le réservoir aérien par l'intermédiaire de l'ossature de suspension.

Ainsi, selon la présente invention, le réservoir aérien et l'ossature de suspension sont reliés entre eux d'une manière qui les rend physiquement indissociables, de telle sorte qu'ils forment un ensemble porteur. Le plancher technique, ainsi que d'autres éléments mentionnés ci-après, sont fixés directement ou indirectement à l'ossature de suspension.

De préférence, la station-service comprend en outre des anneaux de levage solidarisés à l'ossature de suspension et permettant, en manutention, un levage d'un seul tenant de la totalité de la station-service. En d'autres termes, lorsque l'on manutentionne l'ensemble porteur formé par le réservoir aérien et l'ossature de suspension, on manutentionne l'ensemble de la station-service.

La station-service est, de préférence, configurée de telle sorte que, en utilisation, une partie inférieure du plancher technique est disposée au-dessus d'un plan sur lequel reposent les berceaux de support afin de faciliter la pose de la station-service sur les fondations des berceaux, le plancher ne touchant ainsi jamais le sol.

De préférence, l'ossature de suspension comprend deux longerons s'étendant selon une direction longitudinale du réservoir aérien sur toute la longueur de la station-service, deux entretoises reliant chacune une extrémité d'un longeron respectif à l'extrémité correspondante de l'autre longeron, et des traverses boulonnées sur les longerons.

De préférence, le plancher technique est solidarisé à l'ossature de suspension, de façon nouvelle et inventive, par des barres de suspension solidarisées aux longerons et à l'ossature du plancher technique.

De préférence, la station-service comprend en outre un bac de rétention recevant le réservoir aérien, le bac de rétention étant solidarisé à l'ossature de suspension et configuré pour récupérer le carburant en cas de fuite du réservoir aérien.

De préférence, le bac de rétention est solidarisé à l'ossature de suspension, de façon nouvelle et inventive, par l'intermédiaire de suspentes boulonnées aux extrémités des traverses de l'ossature de suspension et soudées sur les parois du bac de rétention.

De préférence, l'ossature de suspension est solidarisée à la partie supérieure du réservoir aérien, de façon nouvelle et inventive, par cinq ensembles rigides composés chacun : d'une platine soudée sur le dessus du réservoir, et de deux traverses, réalisées de préférence en profilé du type CORNIERE ou UPN, boulonnées sur la platine et sur lesquelles sont soudés les longerons de l'ossature de suspension.

De préférence, les boulons qui permettent de boulonner les traverses des cinq ensembles rigides sur les platines ainsi que les boulons qui permettent de boulonner les suspentes du bac de rétention aux extrémités des traverses de l'ossature de suspension peuvent être en matière plastique, de préférence en polychlorure de vinyle (PVC), ou toute autre matière similaire. Ainsi, en cas d'incendie du carburant du réservoir aérien, ces boulons seront détruits par le feu et le bac de rétention ainsi que le réservoir aérien seront désolidarisés de l'ossature de suspension et de tous les éléments de la station-service, qui subiront des déformations du fait de l'incendie.

De préférence, la station-service comprend en outre une enveloppe extérieure solidarisée, de façon nouvelle et inventive, à l'ossature de suspension et protégeant la station-service d'un environnement extérieur. En particulier, l'enveloppe extérieure peut comprendre une couverture fixée sur les traverses de l'ossature de suspension, et des façades fixées aux suspentes du bac de rétention. Une telle configuration permet de supprimer l'ossature métallique du bâtiment, présente dans les stations-service de l'état antérieur de la technique.

De préférence, l'ensemble des composants de la station-service repose directement ou indirectement sur les fondations des berceaux du réservoir par l'intermédiaire des berceaux du réservoir.

On va maintenant décrire un mode de réalisation particulier de la présente invention, avec référence aux dessins annexés. Sur ces dessins :

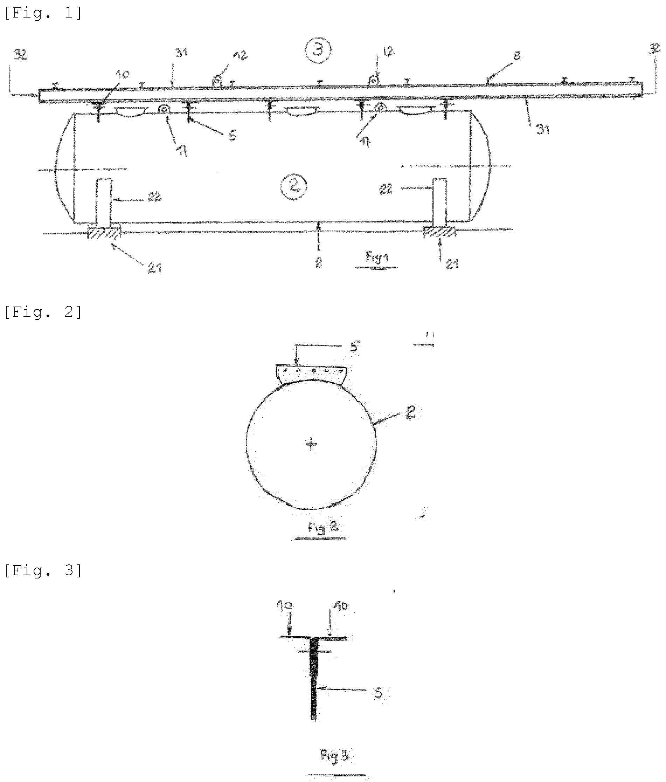

[Fig. 1] est une vue de gauche de l'ensemble porteur de la station-service 1 composé du réservoir 2 et de l'ossature de suspension 3 solidarisés entre eux par cinq ensembles rigides composés chacun d'une platine 5 et de deux traverses 10.
[Fig. 2] est une vue suivant une coupe perpendiculaire à l'axe du réservoir, sur laquelle figure une platine 5 soudée sur le réservoir 2.
[Fig. 3] est une vue d'un ensemble rigide de solidarisation entre le réservoir 2 et l'ossature de suspension 3, les traverses 10 étant fixées de préférence par boulonnage sur la platine 5.

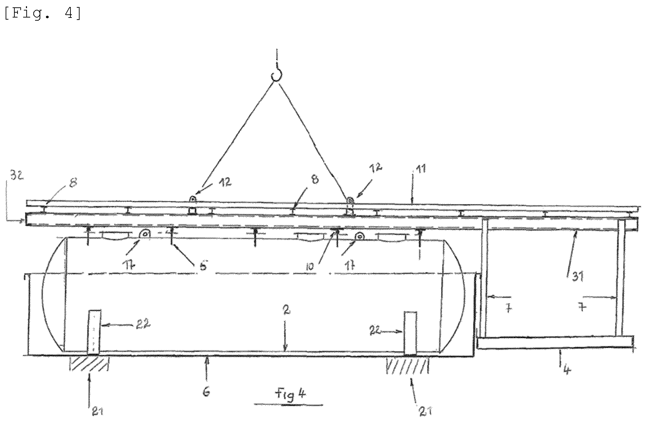

[Fig. 4] est une vue de gauche d'une station-service selon le mode de réalisation de l'invention, sur laquelle sont représentés en particulier le bac de rétention 6 et le plancher 4. Pour plus de clarté, l'enveloppe extérieure et les suspentes 9 du bac de rétention ne sont pas représentées, et le grand côté du bac de rétention est représenté de manière transparente.

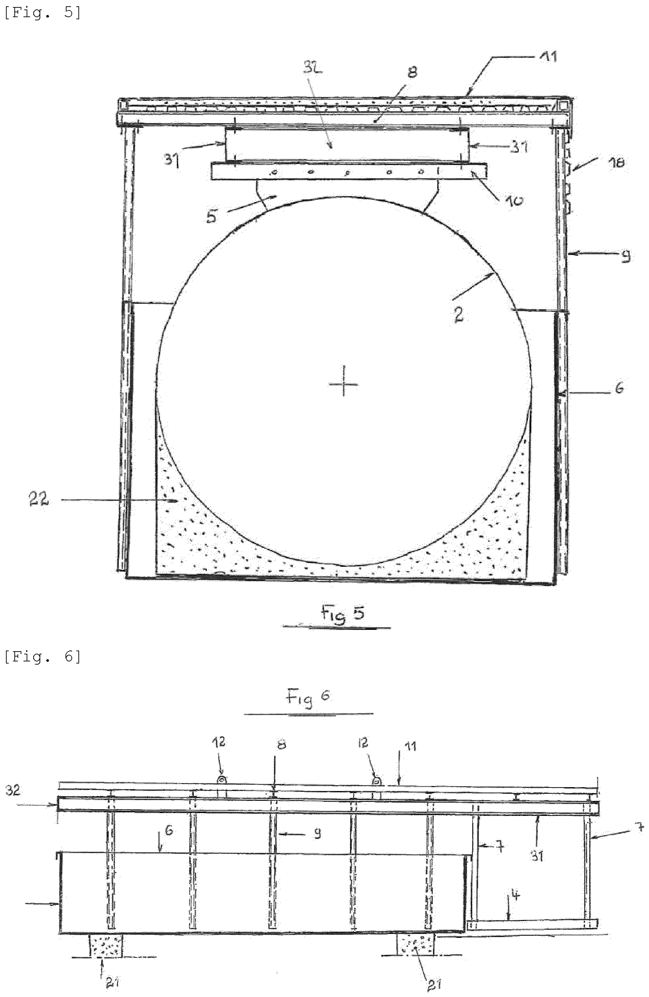

[Fig. 5] est une vue suivant une coupe perpendiculaire à l'axe du réservoir, sur laquelle sont représentées :
   - les suspentes 9 du bac de rétention 6,
   - l'enveloppe extérieure, qui comprend la couverture 11 solidarisée aux traverses 8 et les façades 18 fixées sur les suspentes 9,
   - un ensemble rigide de solidarisation composé d'une platine 5 et de deux traverses 10.
[Fig. 6] est une vue de gauche d'une station-service, sur laquelle on a représenté les suspentes 9 du bac de rétention, fixées sur les traverses 8 de l'ossature de suspension et soudées sur les parois du bac de rétention, le plancher 4 suspendu aux longerons 31 par les suspentes 7.

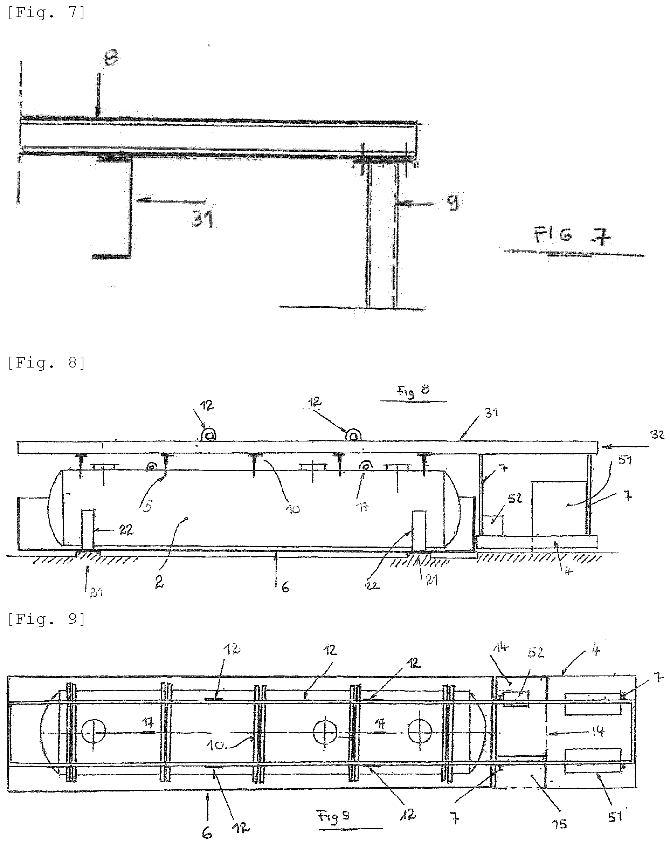

[Fig. 7] est une vue qui montre comment les suspentes 9 sont fixées sur les traverses 8.
[Fig. 8] est une vue de gauche de la station-service sur laquelle on a représenté les anneaux de levage 12 solidarisés aux longerons 31 de l'ossature de suspension, qui permettent de manutentionner la station-service.
[Fig. 9] est une vue de dessus de la station-service, sur laquelle on a représenté les quatre anneaux de levage 12, qui permettent de manutentionner la station-service.

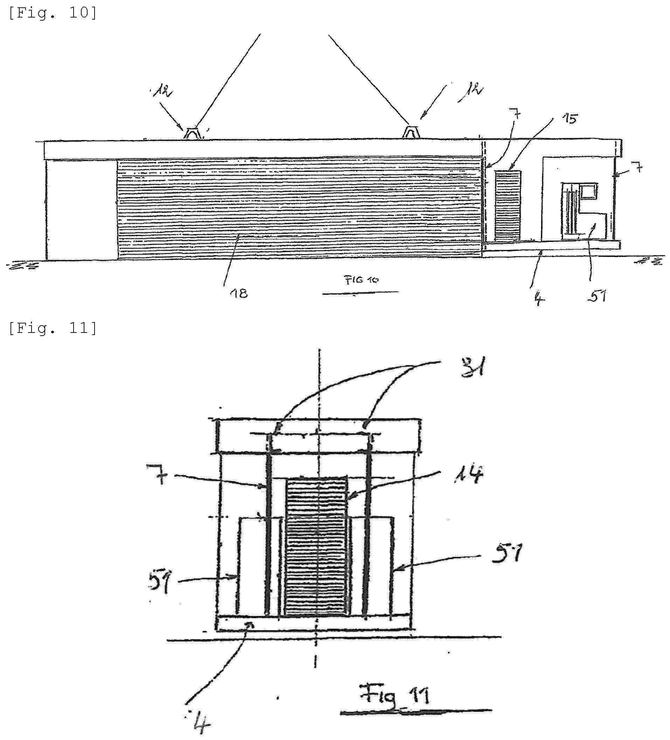

[Fig. 10] est une vue de gauche de la station-service, sur laquelle l'enveloppe extérieure est représentée, en particulier la porte du local électrique 15.
[Fig. 11] est une vue de face de la station-service, sur laquelle la façade est représentée, en particulier la porte du local technique 14.

Pour concevoir le procédé d'assemblage d'une station-service identique à celle de la présente invention, il faut connaître sa capacité c'est-à-dire le volume de son réservoir.

On peut ainsi déterminer le diamètre, la longueur et avoir le poids du réservoir, qui est le composant le plus lourd de la station-service.

La capacité doit permettre :
- de satisfaire les exigences des fournisseurs en acceptant des livraisons de 30 000 l environ,
- d'avoir peu de ruptures de stock.

A titre d'exemple, nous considèrerons une station-service de 45 000 l qui satisfait à ces conditions :
- le réservoir a un diamètre de 2,50 m, une longueur de 9,60 m et pèse 3 500 kg,
- la station-service aura une largeur de 2,90 m environ, une longueur de 13,50 m, pèsera 13 tonnes, et sera transportable par un camion.

Cette station-service peut être fabriquée dans un hall, qui a deux ponts roulants de 10 tonnes et une hauteur sous crochet de 5,50 m.

### Montage de la station-service

De préférence, pour des raisons de compétence et de moyens, le fabricant du réservoir soude sur le réservoir 2 les platines des cinq ensembles rigides qui permettent de solidariser entre eux le réservoir et l'ossature de suspension, qui constituent l'ensemble porteur de la station-service, l'ossature faisant office d'élément de suspension, le réservoir supportant la station-service.

A réception du réservoir, on fixe par boulonnage les traverses 10 sur les platines 5.

Simultanément on fabrique l'ossature de suspension en assemblant par soudage les longerons 31 et les traverses 32, en fixant par boulonnage les traverses 8 sur les longerons 31 et en fixant par soudage les quatre anneaux de manutention 12 sur les longerons 31.

Ensuite, on pose l'ossature de suspension sur les traverses 10 des ensembles rigides, qui liaisonnent l'ossature de suspension au réservoir 2, et on soude les longerons 31 sur les traverses 10.

Ayant ainsi fabriqué l'ensemble porteur, qui comprend le réservoir 2 et l'ossature de suspension 3, on l'introduit dans le bac de rétention 6.

On termine ensuite la fabrication de la station-service mobile à réservoir aérien :
- en solidarisant le bac de rétention à l'ossature de suspension au moyen de suspentes 9 boulonnées aux extrémités des traverses 8 de l'ossature de suspension et soudées sur les parois du bac de rétention,
- en solidarisant le plancher technique à l'ossature de suspension 3 au moyen des suspentes 7 boulonnées sur les longerons 31 et sur l'ossature du plancher technique,
- en fixant la couverture 11 sur les traverses 8 de l'ossature de suspension,
- en fixant le bardage 18 des parois périphériques sur les suspentes 9 du bac de rétention,
- en mettant en place les appareils de distribution et la pompe de dépotage ainsi que les réseaux d'alimentation de de distribution du carburant

On a ainsi fabriqué, à partir de l'ensemble porteur constitué du réservoir et de l'ossature de suspension, la station-service mobile manutentionnable d'un seul tenant, que l'on peut manutentionner avec une grue télescopique, dont on accroche les élingues aux anneaux de levage 12, qui dépassent de la couverture.

Il est bien entendu que le mode de réalisation particulier qui vient d'être décrit, a été donné à titre indicatif et non limitatif, et que des modifications peuvent être apportées sans que l'on s'écarte pour autant du cadre de la présente invention.

Le mode de réalisation de la présente invention décrit ci-avant, en particulier le montage, permet de penser que cette station-service permettra de remplacer les stations-service qui ont été supprimées dans les communes (cf. : Introduction de la description), et de pouvoir satisfaire de nombreux acquéreurs potentiels.

Il faudra pour cela que l'entreprise qui fabriquera les stations propose un seul modèle d'une capacité de 40 000 à 50 000 l, le réservoir ayant à la demande de chaque client un, deux ou trois compartiments.

Les stations étant toutes identiques l'entreprise n'aura plus de frais d'étude et pourra organiser ses relations avec les fournisseurs et ses sous-traitants, ainsi que ses propres fabrications pour améliorer ses prix de revient.

La station-service, objet de la présente invention, pourra être implantée à moins de trente mètres des limites du site.

Il faudra pour cela :
- que les parois du bac de rétention aient une hauteur de 2,50 m minimum,
- qu'avant d'introduire le réservoir dans le bac de rétention, on projette sur les faces intérieures des parois et du fond, un revêtement coupe-feu dont l'épaisseur permettra aux parois et au fond d'être coupe-feu EI120 à la température de 1200°, et
- que les boulons qui permettent de boulonner les traverses des cinq ensembles rigides sur les platines ainsi que les boulons qui permettent de boulonner les suspentes du bac de rétention aux extrémités des traverses de l'ossature de suspension soient en PVC, de telle sorte qu'en cas d'incendie du carburant du réservoir aérien, ces boulons seront détruits par le feu et le bac de rétention et le réservoir aérien seront désolidarisés de l'ossature de suspension et de tous les éléments de la station-service, qui subiront des déformations du fait de l'incendie.

Les parois feront office de mur coupe-feu et seront conformes à l'Arrêté ministériel du 15/04/2010 qui précise : « Les réservoirs aériens peuvent être implantés à une distance inférieure à 30 m des limites du site en cas de mise en place d'un mur coupe-feu EI120 permettant de maintenir les effets létaux sur le site ».

A ce jour, aucune solution conforme à l'Arrêté ministériel du 15/04/2010 n'a été proposée.

## Revendications

1. Station-service (1) mobile, comprenant un réservoir aérien (2) de stockage de carburant comportant au moins un compartiment de stockage de carburant et des berceaux de support (22), **caractérisée par le fait que** la station-service (1) comprend en outre :
- une ossature métallique de suspension (3) solidarisée à une partie supérieure du réservoir aérien (2), l'ossature de suspension (3) s'étendant sur toute la longueur de la station-service (1) ; et
- un plancher technique (4) qui supporte un local technique (14) qui contient un ensemble de dépotage (52) de carburant, un local électrique (15) ainsi que des appareils de distribution (51) de carburant, le plancher technique (4) étant agencé sous une partie de l'ossature de suspension (3) qui est en porte-à-faux vis-à-vis du réservoir aérien (2), et solidarisé à l'ossature de suspension (3), de telle sorte qu'en utilisation le plancher technique (4) est supporté par le réservoir aérien (2) par l'intermédiaire de l'ossature de suspension (3).

2. Station-service (1) selon la revendication 1, **caractérisée par le fait que** la station-service (1) comprend en outre des anneaux de levage (12) solidarisés à l'ossature de suspension (3) et permettant, en manutention, un levage d'un seul tenant de la totalité de la station-service (1).

3. Station-service (1) selon l'une quelconque des revendications 1 et 2, **caractérisée par le fait que** la station-service (1) est configurée de telle sorte que, en utilisation, une partie inférieure du plancher technique (4) est disposée au-dessus d'un plan sur lequel reposent les berceaux de support (22) afin de faciliter la pose de la station-service (1) sur les fondations (21) des berceaux (22).

4. Station-service (1) selon l'une quelconque des revendications 1 à 3, **caractérisée par le fait que** l'ossature de suspension (3) comprend deux longerons (31) s'étendant selon une direction longitudinale du réservoir aérien (2), sur toute la longueur de la station-service (1), deux entretoises (32) reliant chacune une extrémité d'un longeron (31) respectif à l'extrémité correspondante de l'autre longeron (31) et des traverses (8) posées et boulonnées sur les longerons (31).

5. Station-service (1) selon la revendication 4, **caractérisée par le fait que** le plancher technique (4) est solidarisé à l'ossature de suspension (3) par des barres de suspension (7) solidarisées aux longerons (31) et à l'ossature du plancher technique (4).

6. Station-service (1) selon l'une quelconque des revendications 1 à 5, **caractérisée par le fait que** la station-service (1) comprend en outre un bac de rétention (6) recevant le réservoir aérien (2), le bac de rétention (6) étant solidarisé à l'ossature de suspension (3) et configuré pour récupérer du carburant en cas de fuite du réservoir aérien (2).

7. Station-service (1) selon la revendication 6 prise en dépendance de l'une quelconque des revendications 4 et 5, **caractérisée par le fait que** le bac de rétention (6) est solidarisé à l'ossature de suspension (3) par l'intermédiaire de suspentes (9) boulonnées aux extrémités des traverses (8) et soudées sur les parois du bac de rétention (2).

8. Station-service (1) selon l'une quelconque des revendications 1 à 7, **caractérisée par le fait que** l'ossature de suspension (3) est solidarisée à la partie supérieure du réservoir aérien (2) par l'intermédiaire de cinq ensembles rigides composés chacun :
- d'une platine (5) soudée sur le dessus du réservoir (2), et
- de deux traverses (10) boulonnées sur la platine (5), sur lesquelles sont soudés les longerons (31) de l'ossature de suspension (3).

9. Station-service (1) selon l'une quelconque des revendications 1 à 8, **caractérisée par le fait que** la station-service (1) comprend en outre une enveloppe extérieure solidarisée à l'ossature de suspension (3) et protégeant la station-service (1) d'un environnement extérieur.

10. Station-service (1) selon l'une quelconque des revendications 1 à 9, **caractérisée par le fait que** l'ensemble des composants de la station-service (1) repose directement ou indirectement sur les fondations (21) des berceaux (22) du réservoir (2) par l'intermédiaire des berceaux (22) du réservoir (2).
